# EUROPEAN PATENT APPLICATION

(11) **EP 0 646 915 A2**
(43) Date of publication of application: **05.04.1995**
(21) Application number: 94115458.5
(22) Date of filing: 30.09.1994
(51) Int. Cl.: G11B 15/467

(54) **ATF tracking control system in digital signal magnetic recording/reproducing system**

(30) Priority: 01.10.1993 JP 246578/93; 07.04.1994 JP 69237/94; 13.04.1994 JP 75023/94; 24.06.1994 JP 142851/94
(71) Applicant: HITACHI, LTD., Chiyoda-ku, Tokyo 100 (JP)
(72) Inventor: Nagayama, Keiji, Katsuta-shi (JP); Nakagaki, Harushige, Totsuka-ku, Yokohama-shi (JP); Tanaka, Hiromiki, Fujisawa-shi (JP); Ohara, Yasunori, Totsuka-ku, Yokohama-shi (JP)
(74) Representative: Altenburg, Udo, Dipl.-Phys.

(57) **Abstract**

In an ATF tracking control system operative to automatically determine the polarity of a tracking error signal in a digital signal magnetic recording/reproducing system, a digital signal undergoes digital modulation in such a manner that a frequency spectrum of a digital signal (F0) recorded on a first track (T0) has dips at predetermined frequencies (f1, f2), a frequency spectrum of a digital signal (F1) recorded on a second track (T1) has a peak at the frequency (f1) and a dip at the frequency (f2), a frequency spectrum of a digital signal (F0) recorded on a third track (T2) has dips at the frequencies (f1, f2) and a frequency spectrum of a digital signal (F2) on a fourth track (T3) has a peak at the second frequency (f2) and a dip at the first frequency (f1). Heads (A, B) scan the first to fourth tracks (T0, T1, T2, T3) alternately sequentially. The frequencies (f1, f2) are utilized as pilot signals for tracking control. A tracking error is determined on the basis of a difference in level between pilot signals contained in crosstalk signals from tracks adjacent to a track scanned with the head (A). The polarity of the tracking error is alternately switched by a switching signal generated on the basis of a reproduction signal by the head (B) to provide a tracking error signal (V_{E}). The travel speed of the magnetic tape is controlled in accordance with the tracking error signal such that the tracking error is rendered to be zero. In order to eliminate a difference in level between pilot signals recorded on the tracks, a variable gain amplifier (70) adjusts the signal level of any one of pilot signals (f1, f2) produced when the head (B) traces a track and another track, in such a manner that peak levels of the pilot signals are rendered to be equal to each other. As the pilot signals to be detected, any one kind of f1 and f2 pilot signals alone can be used. In an ATF tracking control system operable in the variable speed reproduction mode, heads (A, B) can pick up crosstalk signals and a timing for tracking control is set precedently in accordance with a reproduction speed.

## Description

### BACKGROUND OF THE INVENTION

The present invention relates to an ATF (Automatic Track Finding) tracking control system in a digital VTR for consumer use.

Recently, while digitization of disks and tapes as represented by, for example, CD's and DAT's, respectively, has played a leading role in the field of audio technology, digitization aiming at attainment of higher quality than in high-fidelity VTR has been proceeded with also in the field of public VTR.

Irrespective of the digital VTR for public use, tracking control of the head for use with tape media is an important technique. A variety of tracking control schemes have been adopted in conformity with recording media. For example, as well known in the art, the CTL scheme has been employed in VHS-VTR, the 4-frequency ATF in 8mm VTR and the area division scheme in DAT.

For tracking control in the digital VTR for consumer use, the employment of a control scheme as disclosed in, for example, Japanese patent application un-examined publication No. JP-A-4-255969 has been considered which can increase recording density and permit DFT control meeting diversity.

Japanese patent application un-examined publications (Kokai) Nos. JP-A-4-268258, JP-A-5-95291, and JP-A-5-284034 disclose the circuit structures in the 24-25 modulation digital recording method for the digital multiple ATF system.

In the digital recording scheme disclosed in Japanese patent application un-examined publication (Kokai) No. JP-A-4-255969, digital information data as it is not recorded on a magnetic medium but an original signal is subjected to a specified signal processing based on digital modulation and then recorded.

For example, a continuous original digital information signal is divided every 24 bits. Then, two kinds of data of 25 bits are prepared by adding one bit of "0" or "1" to the head of each of the 24-bit data pieces (information words).

Each 25-bit data piece is 2T (T indicates one bit delay) pre-coded. A digital signal of the 2T-pre-coded 25-bit data piece has a frequency spectrum containing a peak or dip of a specified frequency component.

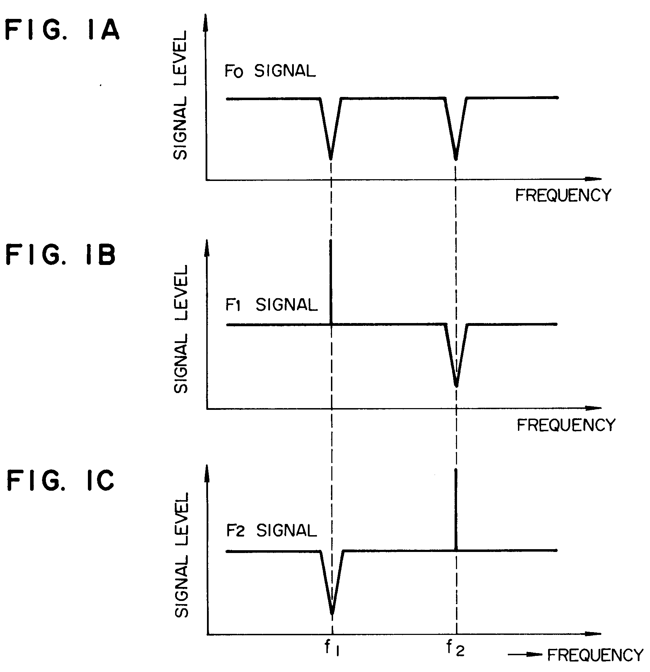

The pre-coded 25-bit digital signal is sorted into a digital information signal F0 having a frequency spectrum containing dips at f1 and f2, a digital information signal F1 having a peak at f1, and a digital information signal F2 having a peak at f2. Figs.1A to 1C show frequency spectra of the digital information signals F0, F1 and F2, respectively. Signals are recorded on a recording medium such as a magnetic tape in the form of the formats of digital information signals F0, F1 and F2.

Signals contained in the digital information signals F1 and F2 to appear at the specified peak frequencies f1 and f2 constitute pilot signals which are utilized to realize tracking during signal reproduction.

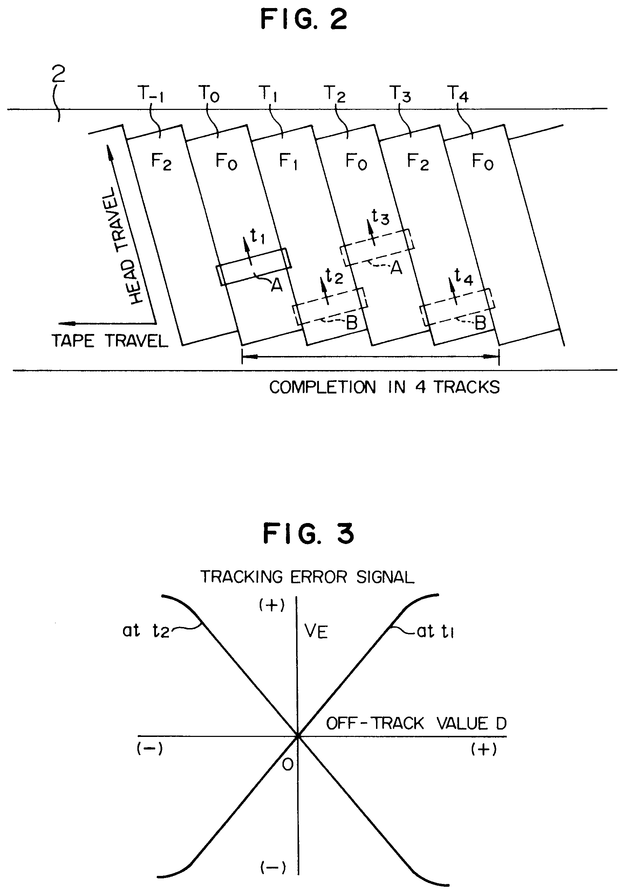

Fig.2 shows an example of a recording pattern on a magnetic tape in the case of helical scan scheme in which two magnetic heads A and B are arranged at positions opposing to each other in respect of the rotary axis of a rotary cylinder by being 180° spaced apart from each. The F0, F1, F0 and F2 signals are sequentially recorded at tracks T0, T1, T2 and T3 respectively on a magnetic tape 2. One cycle is concluded by the four tracks T0 to T3 and is subsequently repeated for recording. In other words, there is provided a pattern in which a recording track of F0 signal is interposed between recording tracks of F1 and F2 signals. Digital information data for one frame of a video signal is recorded at 10 tracks.

Of the two recording heads, the head A is used to read the F0 signal and the head B is used to read the F1 and F2 signals (a 4-head configuration using heads A, B and A', B' is available as will be described later). The A and B heads are spaced apart from each other by a cylinder angle of 180° to oppose to each other, having different azimuth angles (+ and -).

Tracking control is carried out by the A head (at the tracks T0 and T2 for the F0 signal). When the A head scans the track T0 for F0 tracks at time t₁ as shown in Fig.2, not only the F0 signal on the home track T0 but also crosstalk of the F2 and F1 signals from adjacent opposite-side tracks T₋₁ and T1 is reproduced by the A head.

A crosstalk signal from the adjacent track T1 contains a pilot signal component of frequency f1. A crosstalk signal from the adjacent track T-1 contains a pilot signal component of frequency f2.

In the case of Fig.2, each of the heads A and B has a width which is sightly wider than a track width and is therefore allowed to pick up crosstalk signals. Even when the width of the heads A and B is equal to or sightly narrower than the track width, it is possible to pick up crosstalk signals.

The pilot signals f1 and f2 contained in the crosstalk signals can be extracted from a signal reproduced with the head A by means of, for example, band-pass filters. Depending on algorithm of digital modulation, the frequencies f1 and f2 can be set to frequencies which are far below a main frequency band of a recording video signal. Even with the azimuth recording scheme, the azimuth effect less affects low frequency signals and consequently, pilot signals can be detected relatively efficiently from crosstalk signals. Levels of reproduced pilot signals f1 and f2 are compared with each other and if the two levels are equal to each other, it is determined that the head A scans exactly the center of the home track T0.

Namely, a level difference f2-f1 between the pilot signals contained in crosstalk signals from adjacent tracks can be used as a tracking error signal. Through feedback control based on the tracking error signal, the speed of a capstan motor is controlled such that the level difference f2-f1 is rendered to be zero, thereby adjusting the tape travel speed.

Involved in the scanning of the recording track for F0 signal with the A head, however, are two different modes. One mode takes place at time t1 in Fig.2 and is such that the home track T0 (recording track for F0 signal) of the head A is associated with a right-hand adjacent recording track T1 for F1 signal and a left-hand adjacent recording track T-1 for F2 signal. The other mode takes place at time t3 in Fig.2 and is such that the home track of the head A is associated with a right-hand adjacent recording track T3 for F2 signal and a left-hand adjacent recording track T1 for F1 signal.

Fig.3 shows the relation between off-track value D and tacking error signal V_{E}(f2-f1) in the A head. Even at the same off-track value D, the polarity of the tracking error signal V_{E} at time t3 is inverse to that at time t1.

Accordingly, in order to perform correct feedback tracking control, the tracking error signal V_{E} must be switched alternately in order of f2-f1, f1-f2, f2-f1, f1-f2, ... in accordance with the scanning tracks for F0 signal.

### SUMMARY OF THE INVENTION

However, the head A does not always start the initial scanning at time t1 at the head track T0 among the T0 to T3 tracks. If the head A starts the initial scanning at time t1 at the T2 track, the tracking error signal V_{E} must be switched alternately in order of f1-f2, f2-f1, f1-f2, ..... The head A may otherwise start the initial scanning at the T1 track or T3 track. Thus, a track to be scanned initially with the head A cannot be predetermined and therefore an important technical task in magnetic recording and reproduction is to automatically determine the polarity of the feedback signal for tracking control, i.e., the tracking error signal. Other problems to be solved by the present invention are as follows.

When the difference in crosstalk levels of the two pilot signals f1 and f2 is used as the tracking error signal, peak levels of the pilot signals f1 and f2 recorded on tracks must be equal to each other. In the event that the peak level of f2 signal recorded on the track T₋₁ differs from the peak level of f1 signal recorded on the tack T₁, an offset takes place in the characteristics of Fig.3. In other words, even when an off-track value D is present actually, a tracking error signal V_{E} (f2-f1) is rendered to be zero.

When a tracking error signal V_{E} is prepared by comparing pilot signals f1 and f2 of crosstalk signals from tracks adjacent to both sides of a track being scanned with the head A, a difference in recording level between signals of two kinds of frequencies raises a problem to be solved. Further, the provision of two kinds of filters each having a steep characteristic for detection of f1 or f2 leads to high costs. In addition, there needs a circuit for automatically switching the polarity in accordance with tracks.

During reproduction, the tape is sometimes traveled at a higher speed than the normal reproduction speed to picture searching mode at a high speed. Even in the case of digital video, variable speed reproduction as above is desired. Even in the variable speed reproduction, tracking control is carried out.

An object of the present invention is to provide an ATF tracking control system which can automatically determine the polarity of a tacking error signal. In the present invention, switching of the polarity of a tracking error signal is determined by a reproduction signal by the B head. On the basis of a reproduction signal obtained when the B head scans in advance of scanning with the A head, the polarity of a tracking error signal reproduced by the A head can be determined.

Another object of the invention is to provide an ATF tracking control system in which the tracking error signal is free from any offset. In the present invention, the signal level of any one of a f1 pilot signal produced when the head B traces the F1 signal recording track and a f2 pilot signal produced when the head B traces the F2 signal recording track is adjusted by a variable gain amplifier such that the peak level of the f1 pilot signal equals that of the f2 pilot signal.

Still another object of the invention is to provide an ATF tracking control system which can generate a tracking error signal by detecting only one kind of pilot signals.

In the present invention, any one kind of pilot signals f1 and f2 alone is designed to be detected. However, two systems each using any one kind of pilot signals may be used independently. In this scheme, only one kind of pilot signals is used and hence switching of the polarity of a tracking error signal is not needed. Also, a circuit for extracting pilot signals can be simplified.

Still another object of the invention is to provide an ATF tracking control system which is operative in the variable speed reproduction mode. In an embodiment of the invention, the timings for the A and B heads to perform tracking control by picking up crosstalk signals are preset in accordance with reproduction speeds.

Thus, the common task of the present invention is to generate an accurate tracking error signal in the system operative to reproduce a digital signal recorded in accordance with the digital recording scheme as disclosed in JP-A-4-255969. The common construction of the present invention is for performing tracking control by utilizing pilot signals contained in crosstalk signals from adjacent tracks and detected by the head A.

### BRIEF DESCRIPTION OF THE DRAWINGS

Figs.1A, 1B and 1C show frequency spectra of digital information signals recorded on tracks;
Fig.2 shows a track pattern on a magnetic tape on which a digital signal is recorded;
Fig.3 is a graphical representation of characteristics showing the relation between off-track value and tracking error signal;
Fig.4 is a block diagram showing the construction of an embodiment of an ATF tracking control system according to the present invention;
Fig.5 is a block diagram showing the construction of an example of a frequency discriminator unit;
Fig.6 is a diagram showing waveforms appearing at essential parts and useful to explain the operation of the ATF tracking control system of Fig.4;
Fig.7 is a block diagram showing the construction of another embodiment of the ATF tracking control system according to the present invention;
Fig.8 shows the relation between the tracks and the heads;
Fig.9 is a diagram showing waveforms appearing at essential parts and useful to explain the operation of the ATF tracking control system of Fig.7;
Fig.10 is a block diagram showing the construction of still another embodiment of the ATF tracking control system according to the present invention;
Fig.11 is a block diagram showing the construction of another example of the frequency discriminator unit;
Fig.12 is a diagram showing waveforms appearing at essential parts and useful to explain the operation of the ATF tracking control system of Fig.10;
Fig.13 is a block diagram showing the construction of an example of a tracking error signal detector unit;
Fig.14 is a graphical representation of characteristics for explaining an offset of tracking error signal;
Fig.15 is a block diagram showing the construction of still another embodiment of the ATF tracking control system according to the present invention;
Fig.16 is a block diagram showing the construction of an example of a signal level comparator;
Fig.17 is a diagram showing waveforms appearing at essential parts and useful to explain the operation of the tracking control system of Fig.15;
Fig.18 is a block diagram showing the construction of still another embodiment of the ATF tracking control system according to the present invention;
Fig.19 shows the relation between the tracks and the heads;
Fig.20 is a diagram showing waveforms appearing at essential parts and useful to explain the operation of the ATF tracking control system of Fig.18;
Fig.21 is a diagram showing waveforms appearing at essential parts and useful to explain the operation of the Fig.18 ATF tracking control system;
Fig.22 is a block diagram showing the construction of still another embodiment of the ATF tracking control system according to the present invention;
Fig.23 is a block diagram showing the construction of still another embodiment of the ATF tracking control system according to the present invention;
Fig.24 is a waveform diagram for explaining the operation of a timing signal generator circuit;
Fig.25 shows the relation between the tracks and the heads;
Fig.26 is a waveform diagram showing the operation of the timing signal generator circuit;
Fig.27 shows the relation between the tracks and the heads;
Fig.28 is a waveform diagram showing the operation of the timing signal generator circuit; and
Fig.29 shows the relation between the tracks and the heads.

### DESCRIPTION OF THE PREFERRED EMBODIMENTS

The invention will now be described by way of example with reference to the accompanying drawings.

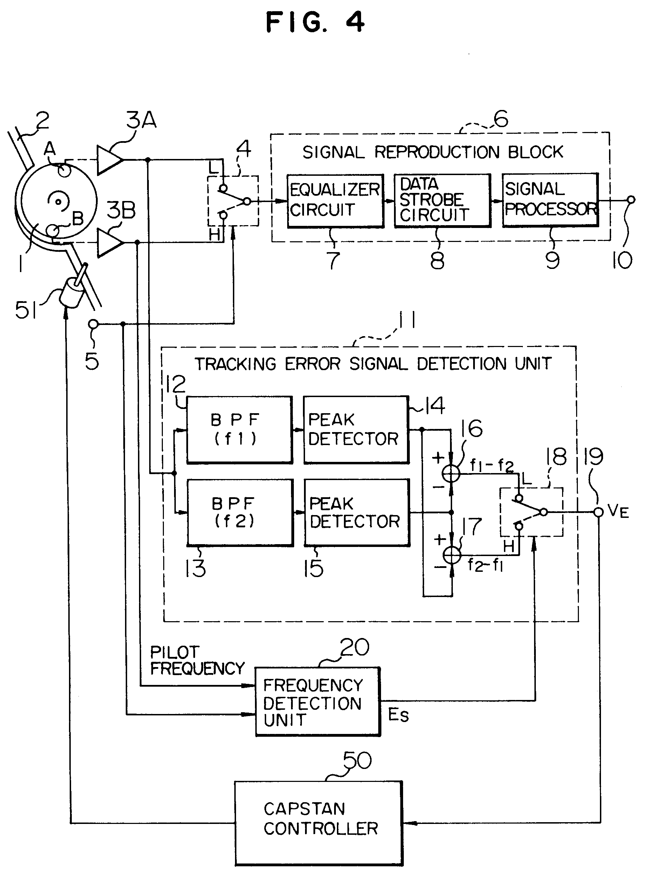

Fig.4 is a block diagram showing the construction of an embodiment of an ATF tracking control system according to the invention. In Figure 4, reference numeral 1 designates a rotary cylinder provided with diametrally opposing heads A and B having different azimuth angles, 2 a magnetic tape wound about the cylinder 1, 3A and 3B amplifiers for amplifying signals read by the heads A and B, respectively, 4 a transfer switch, 5 an input terminal for a head switch signal, 6 a signal reproduction block comprised of an equalizer circuit 7, a data strobe circuit 8 and a signal processor circuit 9, 10 an output terminal of the signal reproduction block 6, 11 a tracking error signal detector unit comprised of a pair of band-pass filters 12 and 13 having center frequencies at f1 and f2, respectively, a pair of peak detectors 14 and 15, a pair of subtracters 16 and 17 for subtracting outputs of the peak detectors 14 and 15 from each other in positive phase relation and negative phase relation, respectively, and a transfer switch 18 for controlling switching of outputs of the subtracters 16 and 17, 19 an output terminal, and 20 a frequency discriminator unit for controlling the transfer switch 18. A capstan controller 50 responds to a tracking error signal V_{E} to perform feedback control for controlling the speed of a capstan motor 51 such that the V_{E} is rendered to be zero, thereby adjusting the tape travel speed. The subtracters 16 and 17 may be replaced with comparator circuits or differential amplifier circuits.

The frequency discriminator unit 20 discriminates pilot frequencies reproduced from the head B. In accordance with results of the discrimination, the transfer switch 18 of the tracking error signal detector unit 11 is controlled to switch the output polarity so that tracking error signals of the same characteristic may be delivered to the output terminal 19.

The tracking error signal detector unit 11 operates as follows. The band-pass filters 12 and 13 extract frequency components of pilot signals f1 and f2 from a reproduction signal by head A obtained through the reproduction amplifier 3A. The peak detectors 14 and 15 respectively detect crosstalk amounts at pilot frequencies f1 and f2 produced from adjacent tracks. A difference in level between the crosstalk amounts are determined by the subtracters 16 and 17 for subtracting the outputs of the peak detectors 14 and 15 from each other in positive phase relation and negative phase relation, so that the subtracter 16 delivers an error signal of f1-f2 and the subtracter 17 delivers an error signal of f2-f1. The transfer switch 18 is controlled by a control signal Es of the frequency discriminator unit 20 such that its contact is transferred to L side shown in Fig.4 when Es is "low" level but to H side when Es is "high" level.

The frequency discriminator unit 20 also discriminates reproduction signal frequencies from the head B obtained through the reproduction amplifier 3B and delivers a discrimination signal Es which assumes "low" level when the reproduction signal is f1 but assumes "high" level when the reproduction signal is f2. Hereinafter, the low level signal is represented by "L" and the high level signal by "H".

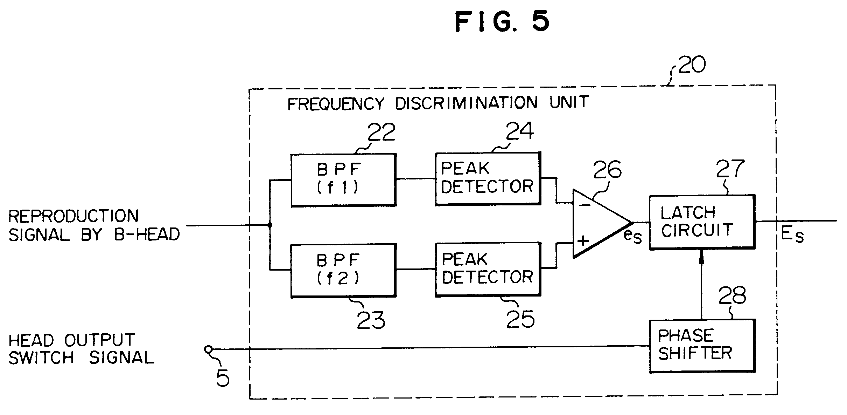

Fig.5 shows and a specified example of the construction of the frequency discriminator unit 20.

In Fig.5, reference numerals 22 and 23 designate band-pass filters having center frequencies to be passed at f1 and f2, respectively, 24 and 25 peak detectors for detecting peaks of output waves of the band-pass filters 22 and 23, respectively, 26 a voltage comparator, 27 a latch circuit, and 28 a phase shifter.

When the head B scans a track recorded with the F1 signal, the output of the peak detector 24 becomes larger than the output of the peak detector 25, so that output es of the voltage comparator 26 assumes "L". Conversely, when the head B scans a track recorded with the F2 signal, the output of the peak detector 25 becomes larger than the output of the peak detector 24 and consequently, the signal es assumes "H". The signal eₛ is inputted to the latch circuit 27. The phase shifter 28 applies a time shift to a head output switch signal 5 (a synchronizing signal which is, for example, "L" during a period in which the head A is tracing the tape but "H" during a period in which the head B is tracing the tape, though not detailed herein). The latch circuit 27 is controlled at a timing which is delayed by a predetermined time relative to the head output switch signal 5. More particularly, during reproduction by the head B, the latch circuit 27 is controlled at a timing which is delayed by a predetermined time beginning with a start point of reproduction, with the result that the latch signal Es is delivered which assumes "L" when a f1 track is scanned but assumes "H" when a f2 track is scanned, in accordance with reproduction tracks by the head B. Obviously, the latch output Es is renewed every scanning with the head B, i.e., each time that the cylinder makes one rotation.

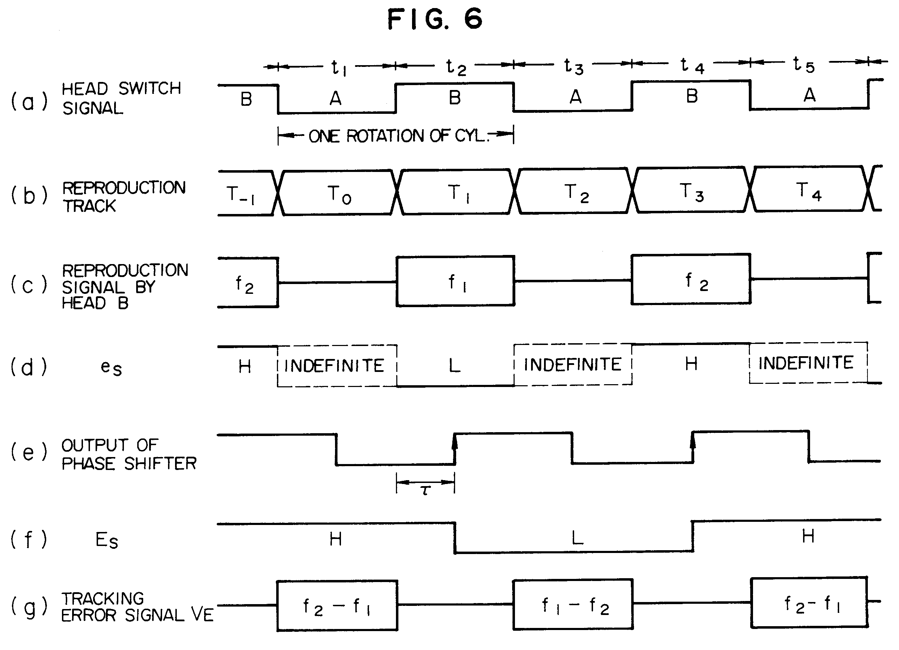

The overall operation of the system constructed as above will now be described with reference to Figs.2 and 6.

Fig.2 shows the behavior of head scanning. On the assumption that scanning starts at a timing which coincides with time t1, the heads A and B sequentially alternately scan recording tracks T0, T1, T2, T3 ..... every half rotation of the cylinder and repeat the scanning to perform signal reproduction. The scanning with the heads is of course carried out synchronously with the head switch signal 5 shown in Fig.4. On time axis, the head switch signal 5 is related to the reproduction tracks at timings as shown at (a) and (b) in Fig.6. In that case, the pilot signal frequency reproduced by the head B alternately assumes f1 and f2 during a period corresponding to a cylinder half-rotation period (in the instance shown herein, the winding angle of tape on the cylinder is 180°) as shown at (c) in Fig.6 and as a result, the comparator 26 of the frequency discriminator unit 20 delivers "L" at the f1 reproduction track, "H" at the f2 reproduction track and an indefinite discrimination signal es during a non-reproduction period as shown at (d) in Fig.6.

On the other hand, the phase shifter 28 delays the head switch signal by a predetermined time τ to generate a shift signal as shown at (e) and uses this signal to control the latch circuit 27. The latch circuit 27 latches the input es from voltage comparator 26 at (d) at a timing of a rise edge of the control signal at (e). Consequently, the latch circuit delivers a control signal Es as shown at (f) and this control signal controls the transfer switch 18 of the tracking error signal detector unit 11, thereby ensuring that a tracking error signal V_{E} can be delivered having the polarity which is f2-f1 at a timing for "H" of Es and f1-f2 at a timing for "L" of Es as shown at (g).

According to the present embodiment, selection of the polarity of a tracking error signal by the head A is effected automatically in accordance with results of discrimination of reproduction pilot signal frequencies by the preceding head B, so that even when the head A starts scanning upon start of reproduction at any track regardless of the position of 4 tracks T₀ - T₃, the tracking error signal having constant characteristics in terms of servo polarity can be detected stably and accurately.

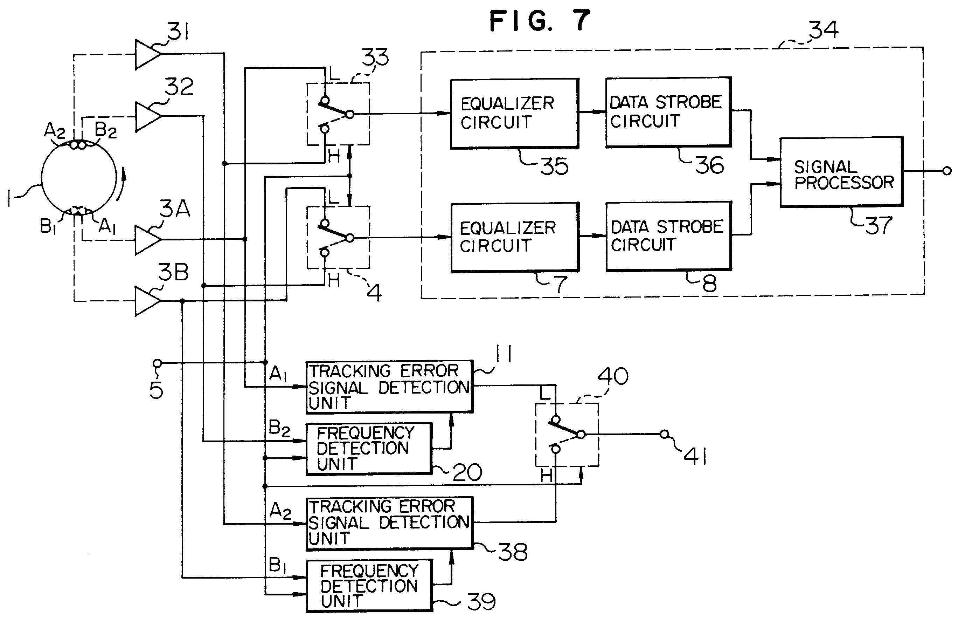

Fig.7 is a block diagram showing the construction of another embodiment of the ATF tracking control system according to the present invention. In the Figure, reference numeral 1 designates a rotary cylinder provided with four heads including diametrally opposing heads A1, A2 of the same azimuth and diametrally opposing heads B1, B2 of the same azimuth which are adjacent to the heads A1 and A2 in opposite azimuth relation therewith, 31 and 32 amplifiers for amplifying reproduction signals from the heads A2 and B2, 33 a transfer switch, 34 a signal reproduction block comprised of a pair of equalizer circuits 7 and 35, a pair of data strobe circuits 8 and 36 and a signal processor circuit 37, 38 a tracking error signal detector unit paired with the tracking error signal detector unit 11 and having the same construction as the detector 11, 39 and 20 a pair of frequency discriminator units, 40 a switch unit controlled by a head switch signal 5 to control switching of the detector units 11 and 38, and 41 an output terminal. The other components designated by the same reference numerals as those in Fig.4 are identical or equivalent to components in Fig.4 and operate in the same way.

In Fig.7, the capstan controller 50 is not illustrated which responds to a tracking error signal V_{E} at the output terminal 41 to perform feedback control for controlling the speed of the capstan motor 51 such that the V_{E} is rendered to be zero, thereby adjusting the tape travel speed.

In the embodiment of Fig.7, the embodiment of Fig.4 is modified in such a way that one-channel configuration of the heads A and B is replaced with two-channel configuration of the heads A1, B1 and A2 and B2. At the time that tracks are scanned with the heads A1 and B1, pilot frequencies reproduced from the head B2 preceding by half rotation are discriminated by the frequency discriminator unit 20. In accordance with results of the discrimination, the transfer switch 18 of tracking error signal detector unit 11 (Fig.4) is controlled so that the output of the tacking error signal detector unit 11 may be delivered to the output terminal 41 through the switch unit 40. At the time that tracks are scanned with the heads A2 and B2, pilot frequencies reproduced from the head B1 preceding by half rotation are similarly discriminated by the frequency discriminator unit 39 and in accordance with results of the discrimination, the transfer switch 18 of the tracking error signal detector unit 38 is controlled to deliver the output of the tracking error signal detector unit 38 to the output terminal 41 through the switch unit 40.

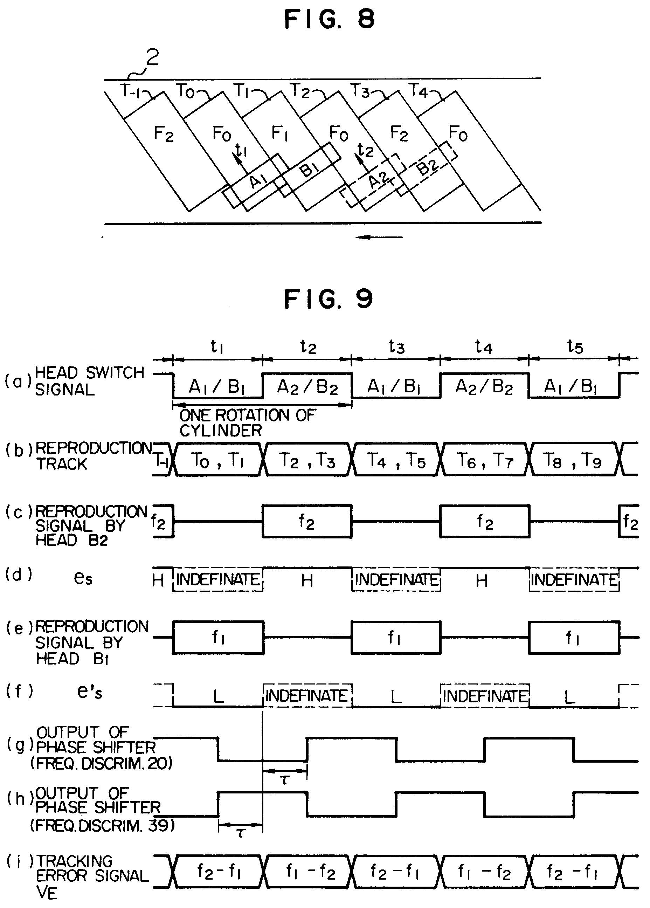

The operation of the above system will now be described with reference to Figs.8 and 9.

Fig.8 shows the behavior of head scanning. On the assumption that scanning starts at a timing which coincides with time t1, the heads A1, B1 and A2, B2 sequentially alternately scan recording tracks T0, T1 and T2, T3 .... every half rotation of the cylinder and repeat the scanning to perform signal reproduction. The scanning with the heads is of course carried out synchronously with the head switch signal 5 shown in Fig. 7. On time axis, the head switch signal is related to the reproduction tracks at timings as shown at (a) and (b) in Fig.9. In that case, the pilot signal detected by the head B2 is reproduced at frequency f2 during a period corresponding to a cylinder half-rotation period (in the instance shown herein, the winding angle of tape on the cylinder is 180°) as shown at (c). The comparator 26 (Fig.5) of the frequency discriminator unit 20 delivers "H" during a period of the f2 signal as shown at (d) and an indefinite discrimination signal es during a non-reproduction period. Similarly, the head B1 reproduces a pilot signal frequency which is f1 as shown at (e). The comparator 26 of the frequency discriminator unit 39 delivers "L" during the f1 signal reproduction period as shown at (f) and an indefinite discrimination signal es' during a non-reproduction period.

On the other hand, the phase shifter 28 (Fig.5) of the frequency discriminator unit 20 delays the head switch signal by a predetermined time τ to generate a shift signal as shown at (g) and the phase shifter 28 of the frequency discriminator unit 39 generates a shift signal shown at (h). At timings of rise edges of these shift signals, the inputs es and es' from the voltage comparators 26 shown at (d) and (f) are latched. Accordingly, the outputs Es and Es' of the frequency discriminator units 20 and 39 are supplied to the transfer switch 40 at the polarity of f2-f1 at the timing of "H" and at the polarity of f1-f2 at the timing of "L". The transfer switch 40 is controlled by the head switch signal 5 such that its contact is transferred to L side shown in the Figure when the control signal is "L" but to H side when the control signal is "H", so that a tracking error signal V_{E} alternately having the polarity of f2-f1 and f1-f2 is delivered to the output terminal as shown at (i).

According to the present embodiment, selection of the polarity of a tracking error signal by the heads A1 and A2 is effected automatically in accordance with results of discrimination of reproduction pilot signal frequencies by the preceding heads B2 and B1, so that even when the head A1 or A2 starts scanning upon start of reproduction at any track regardless of the position of 4 tracks T₀ - T₃, the tracking error signal having constant characteristics in terms of servo polarity can be detected stably and accurately.

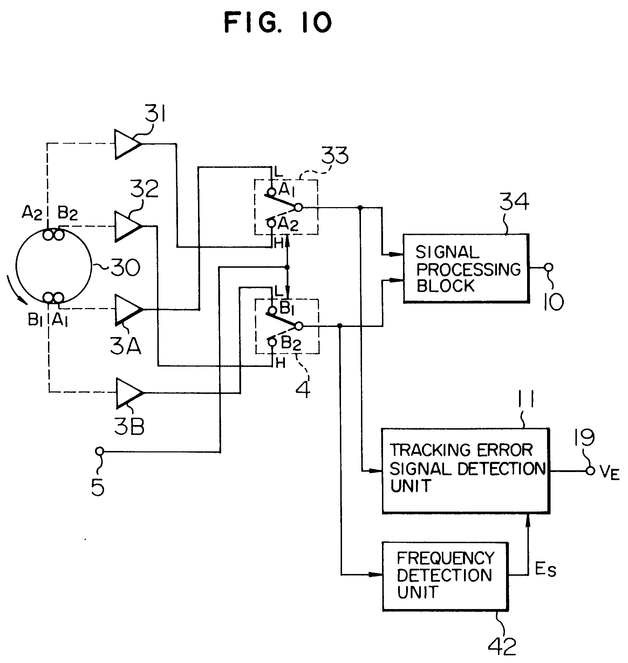

Fig.10 is a block diagram showing the construction of still another embodiment of the ATF tracking control system according to the present invention. In the Figure, reference numeral 42 designates a frequency discriminator unit and the other components designated by the same reference numerals as those in Figs.4 and 7 are identical or equivalent to components in Figs.4 and 7 and operate in the same way.

In Fig.10, the capstan controller 50 is not illustrated which responds to a tracking error signal V_{E} at the output terminal 19 to perform feedback control for controlling the speed of the capstan motor 51 such that the V_{E} is rendered to be zero, thereby adjusting the tape travel speed.

In the embodiment of Fig.10, selection of the polarity of a tracking error signal by the heads A1 and A2 is effected automatically in accordance with results of discrimination of reproduction pilot signal frequencies by the parallel-travel heads B1 and B2.

The frequency discriminator unit 42 discriminates, from each other, reproduction signal frequencies by the heads B1 and B2 obtained through the reproduction amplifiers 3B and 32 to deliver a discrimination signal Es which is "L" when the reproduction signal is f1 but "H" when the reproduction signal is f2.

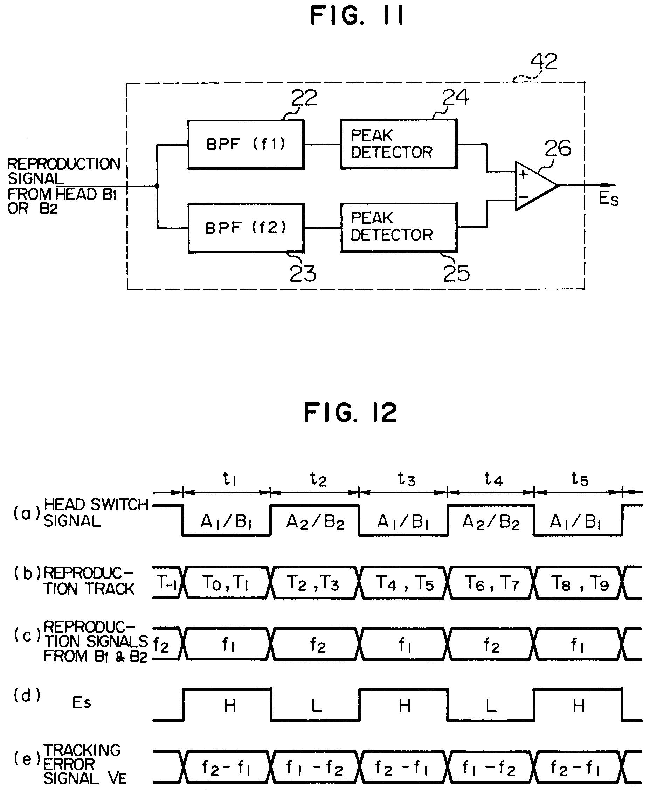

Fig.11 shows a concrete example of the construction of the frequency discriminator unit 42. In the Figure, components designated by the same reference numerals are identical or equivalent to those of Fig.5 and the Fig.11 construction differs from the Fig.5 construction in that the latch circuit 27 and phase shifter 28 are removed and the polarity of the voltage comparator 26 is inverted.

The overall operation of the system constructed as above will now be described with reference to Fig.12.

The head scanning and the recording pattern of tracks are the same as those of the Fig.7 embodiment and on time axis, the head switch signals is related to reproduction tracks at timings as shown at (a) and (b) in Fig.12. In that case, a pilot signal frequency reproduced from B1 assumes f1 and the pilot signal frequency reproduced from B2 assumes f2. The transfer switch 4 is controlled by the head switch signal 5 and is operated such that its contact is transferred to L side in the Figure when the control signal is "L" but to H side when the control signal is "H". Through this, a control signal Es shown at (d) is obtained at the output of the tracking error signal detector unit 11 and this control signal controls the transfer switch 18 (Fig.4) of the tracking error signal detector unit 11, so that a tracking error signal VE is delivered at the polarity of f2-f1 at the timing of "H" of Es and at the polarity of f1-f2 at the timing of "L" of Es.

According to the present embodiment, selection of the polarity of a tracking error signal by the heads A1 and A2 is effected automatically in accordance with results of discrimination of reproduction pilot signal frequencies by the parallel-travel heads B1 and B2. Even when the head A1 or A2 starts scanning upon start of reproduction at any track regardless of the position of a conclusion pattern by 4 tracks, the tracking error signal having constant characteristics in terms of servo polarity can be detected stably and accurately.

The embodiments of the invention has been described.

The frequency discriminator unit have been described by way of concrete examples with reference to Figs.5 and 11 but is not particularly limited thereto and may be realized with, for example, a well-known frequency discriminator.

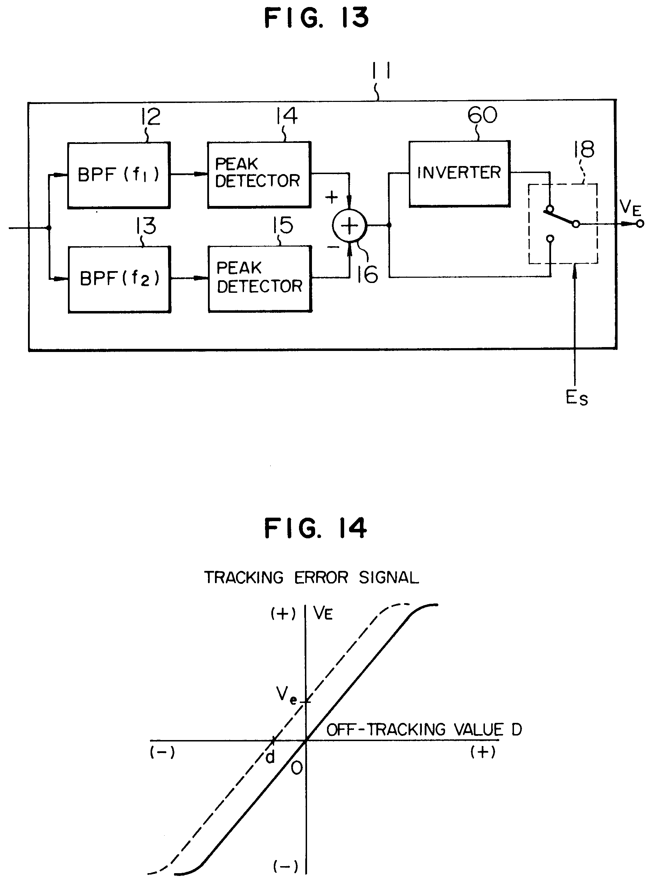

The tracking error signal detector unit according to the invention is not limited to the construction having a pair of subtracters of positive and negative phases. For example, a single subtracter can be used and its output can be controlled switchably to provide non-inverting and inverting outputs. Fig.13 shows another example of the construction of tracking error signal detector unit to this effect. In Figure 13, the same reference numerals as those in Fig.4 designate identical components to those in Fig.4. The tracking error signal detector unit 11 of Fig.13 includes an inverter 60 for inverting the polarity of an output f1-f2 of a subtracter (or adder) 16. The contact of the switch 18 is transferred in response to a control signal Es, so that f1-f2 and f2-f1 which stands for the output of the inverter 60 are alternately selected and delivered. Thus, the detector unit can easily be altered or modified in various ways without changing the gist of the present invention.

Results of the detection of a tracking error signal in the embodiment of Fig.4 are expressed discretely so as to be interrupted at times t2 and t4 as shown at (g) in Fig.6, for better understanding of switching of the detection polarity of the error signal for a reproduction track by the head A. Practically, a value of an error signal at a preceding time can be held to perform continuous tracking control.

Referring now to Figs.14 to 17, still another embodiment of the ATF tracking control system according to the present invention will be described. In this embodiment, a difference in recording level between pilot signals f1 and f2 is corrected upon reproduction of the pilot signals.

As has been described with reference to Fig.3, the relation between off-track value D and tracking error control signal V_{E} must exhibit a characteristic as shown by solid line in Fig.14. However, it is not always warranted that levels of pilot signals f1 and f2 recorded on tracks shown in Figs.1B and 1C are equal to each other at F1 and F2 signal recording tracks. In addition, there are a difference occurring between reproduction levels owing to differential characteristics of magnetic recording and reproduction and a difference in loss between band-pass filters for extracting pilot signals of f1 and f2 and these differences cause a constant offset value between level for detection of f1 and level for detection of f2, with the result that the relation between off-track value D and tracking error signal VE assumes, for example, a characteristic as shown by dotted line. In that case, even when the head A actually scans the center of the F0 signal recording track (D=0), a tracking error signal indicated by VE=Ve is detected. Under this condition, when the scanning position of the head A is controlled by controlling the tape speed such that VE=0 stands, the head A actually deviates from the center of the F0 signal recording track to perform scanning suffering an offset of D=d, making it difficult to realize highly accurate tracking.

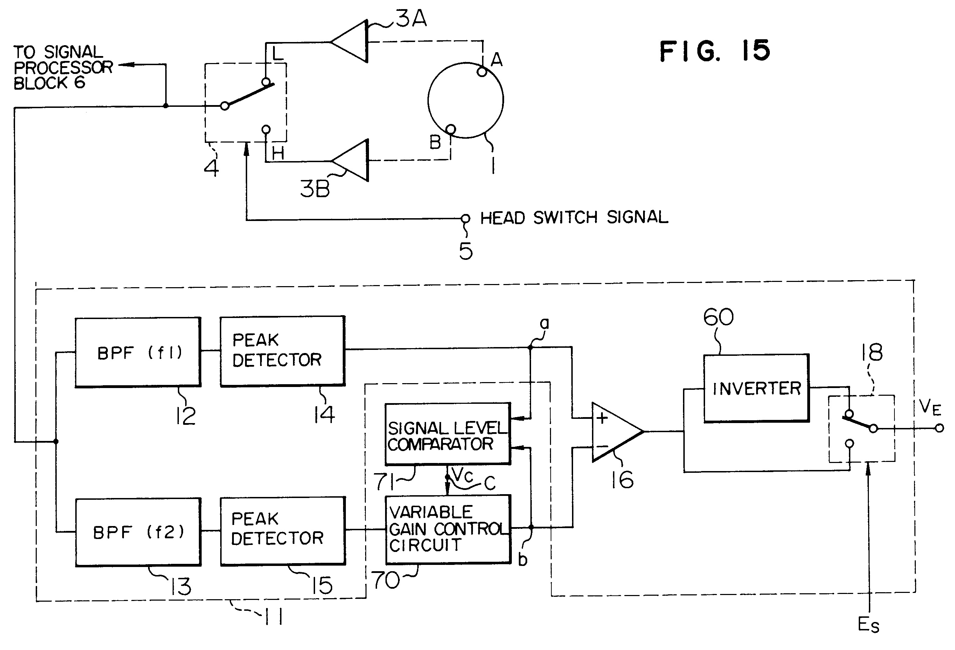

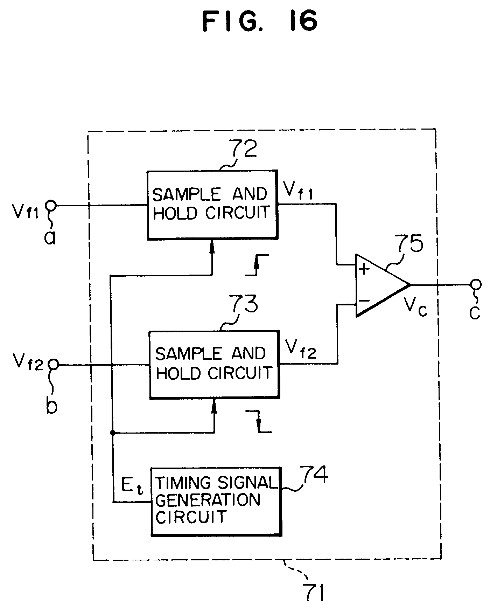

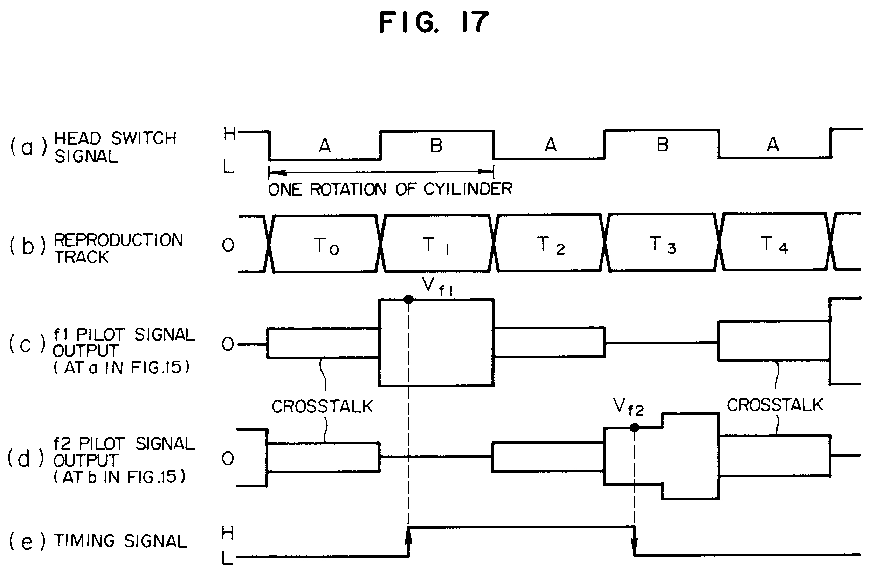

With the embodiment of the invention shown in Fig.15, the above problem can be solved and the difference in recording signal level, the difference in sensitivity to reproduction level and the offset of tracking error signal accompanying the difference in sensitivity between detection circuits can be eliminated to ensure that the head A can scan the center of track accurately.

Fig.15 is a block diagram showing still another embodiment of the ATF tracking control system according to the invention. In the Figure, reference numeral 70 designates a variable gain control circuit and 71 a signal level comparator for controlling the variable gain control circuit 70. Components designated by the same reference numerals as those in Fig.4 or 13 designate identical or equivalent components to those in Fig.4 or 13 and operate in the same way.

In Fig.15, illustration of the capstan controller 50 which responds to a tracking error signal V_{E} to perform feedback control for controlling the speed of the capstan motor 51 such that the V_{E} is rendered to be zero, thereby adjusting the tape travel speed and of the frequency discriminator unit 20 for delivering the control signal E_{S} is omitted.

In the present embodiment, reproduction levels of f1 and f2 pilot signals reproduced from the head B are compared by the signal level comparator 71 and the gain of the variable gain control circuit 70 is controlled in accordance with results of the comparison to control the reproduction level of the f2 pilot signal such that it equals the reproduction level of the f1 pilot signal, thereby eliminating the generation of an offset of tracking error signal V_{E}.

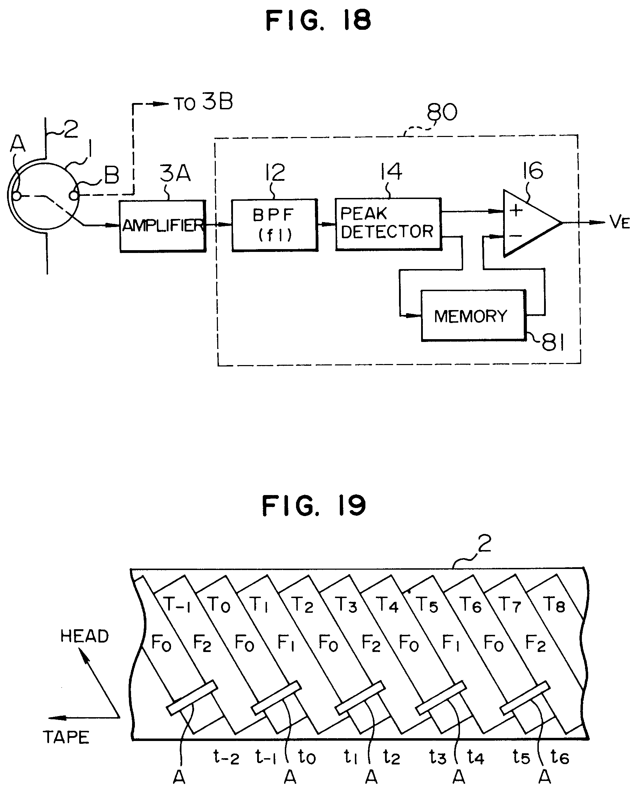

Fig.16 shows a concrete example of the construction of the signal level comparator 71.

In Figure 16, reference numerals a and b designate input terminals (same as a and b in Fig.15), 74 a timing signal generator circuit, 72 and 73 sample and hold circuits, 75 a comparator, and c an output terminal (c in Fig.15).

Reproduction levels Vf1 (input level at terminal a) and Vf2 (input level at terminal b) of f1 and f2 pilot signals reproduced at the timing of scanning with the head B are sampled and held by the sample and hold circuits 72 and 73, respectively, at a timing of a control signal Et delivered out of the timing signal generator circuit 74, and the comparator 75 compares the two levels to deliver a comparison error Vc.

The variable gain control circuit 71 is constructed of, for example, a well-known voltage controlled type variable gain amplifier (AGC amplifier) and responds to the comparison error output Vc to increase the gain when Vc is, for example, positive voltage and conversely decrease the gain when Vc is negative voltage.

The overall operation of the system constructed as above will now be described with reference to Figs.15 to 17.

Detected at outputs of the band-pass filters 12 and 13 are f1 and f2 pilot signals from adjacent tracks when the head A scans but are f1 and f2 pilot signals from a main track when the head B scans, as shown at (c) and (d) in Fig.17. Reproduction levels of the pilot signals are detected by the peak detectors 14 and 15. Then, the sample and hold circuits 72 and 73 operate to sample and hold a reproduction level V_{f1} of the f1 pilot signal at a rise (L → H) of a timing signal Et as shown at (e) in Fig.17 and a reproduction level V_{f2} of the f2 pilot signal at a fall (H → L) of the timing signal Et. A comparison difference Vc between V_{f1} and V_{f2} is detected by the comparator 75. Then, the gain of the variable control circuit 70 is controlled such that the comparison difference Vc is rendered to be zero, with the result that the reproduction level of the f1 pilot signal equals that of the f2 pilot signal during scanning of the T3 track with the head B as shown at (d) in Fig.17. Accordingly, during scanning of the T4 track with the head A, any offset of tracking error signal due to irregularity inherent to the previously-described f1 and f2 detection systems does not occur, thereby causing the relation between off-track value D and tracking error signal V_{E} to assume the solid-line characteristic (V_{f1}=V_{f2}) in Fig.14.

According to the present embodiment, the reproduction levels of the f1 and f2 pilot signals during scanning with the head B are compared with each other to make the reproduction level of the f2 pilot signal equal to that of the f1 pilot signal and therefore a tracking error signal free from any offset can be detected to realize stable and highly accurate tracking.

The levels of f1 and f2 may be adjusted on real time or alternatively they may be adjusted at a predetermined period. If adjustment of the gain of the variable gain control circuit has been completed initially, the gain can be fixed for subsequent use.

While, in the embodiment of Fig.15, the variable gain control circuit 70 is arranged to succeed the peak detector 15, the present invention is not limited to this arrangement. For example, even with the circuit 70 arranged to precede or succeed the band-pass filter 13, similar effects can obviously be attained. Further, the variable gain control circuit 70 may be inserted in the f1 detection system in addition to the f2 detection system. Thus, the arrangement can easily be altered or modified in various ways without changing the gist of the present invention.

Referring now to Figs.18 to 22, still another embodiment of the ATF tracking control system according to the invention will be described. Structurally, in this embodiment, any one kind of pilot signals f1 and f2 alone is detected from crosstalk signals. Since only one kind of pilot signals is used, switching of the polarity of a tracking error signal V_{E} is unnecessary.

Levels of the modulated and recorded pilot signals of frequencies f1 and f2 as shown in Figs.1B and 1C are not always equal to each other. Further, because of a difference in reproduction level between frequencies f1 and f2 due to the differential characteristic of magnetic reproduction, a difference in loss between the BPF's for extraction of the frequencies f1 and f2 and the like factors, even when the magnetic head scans the center of a track, crosstalk levels of the two pilot signals of frequencies f1 and f2 to be detected are not equal to each other. Consequently, when the position of the magnetic head is controlled such that the difference between crosstalk levels of the two pilot signals of frequencies f1 and f2 becomes zero, the magnetic head deviates from the center to perform scanning with an offset.

According to the embodiment of Fig.18, instead of comparing crosstalk levels of pilot signals of different frequencies f1 and f2, crosstalk levels of pilot signals of the same frequency f1 or f2 from different tracks are compared with each other to generate a tracking error signal.

Fig.18 is a block diagram showing the construction of still another embodiment of the ATF tracking control system according to the present invention. The present embodiment is an exemplary application to the case where a tracking control signal is generated by pilot signals of frequency f1. In Fig.18, reference numeral 2 designates a magnetic tape, A and B magnetic heads for recording and reproduction, 1 a rotary cylinder mounted with the magnetic heads A and B, 3A an amplifier for amplifying a reproduction signal of the magnetic head 3A, 12 a band-pass filter for extracting a pilot signal of frequency f1, 14 a peak detector for obtaining a level of the pilot signal f1 delivered out of the band-pass filter 12, 81 a memory for storing the peak level of the pilot signal f1, 16 a differential amplifier (subtracter) for generating a tracking error signal V_{E} in accordance with a level difference between the peak detector 14 and the memory 81.

In Fig.18, the capstan controller 50 is not illustrated which responds to the tracking error signal V_{E} to perform feedback control for controlling the speed of the capstan motor 51 such that the V_{E} is rendered to be zero, thereby adjusting the tape travel speed. Also, a block 80 shown by dotted line may be replaced with the tracking error signal detector unit of the embodiments of Figs.4, 7, 10 and 15. However, the control signal Es and the frequency discriminator unit 20 or 39 are unnecessary in the embodiment of Fig.18.

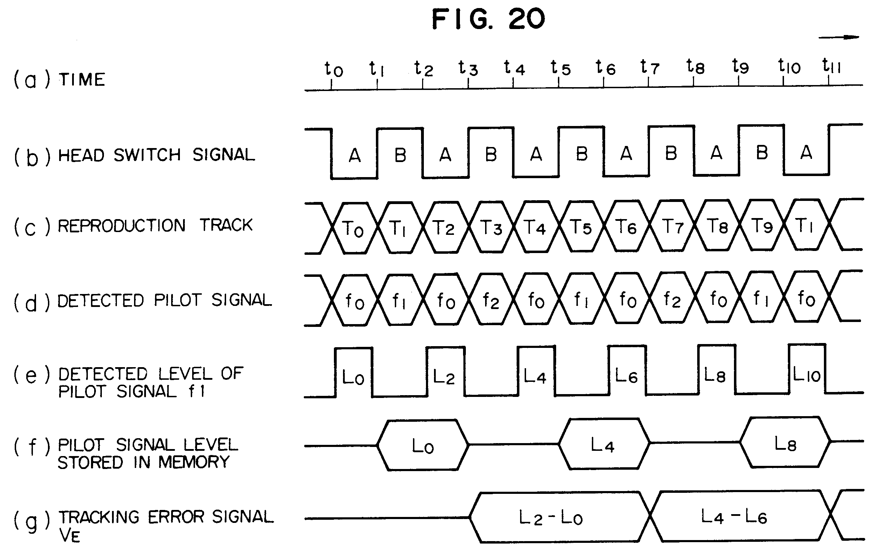

Next, the operation of the present embodiment will be described with reference to Fig.19 showing the relation between the recording track and the magnetic head A and by referring to a waveform diagram of Fig.20. Under the condition that the magnetic head A scans a track T0 at time t0, the band-pass filter 12 having a center frequency of f1 extracts from a signal reproduced by the magnetic head A a pilot signal of frequency f1 contained in a crosstalk signal from an adjacent track T1 which has not yet been scanned. The peak detector 14 detects a crosstalk level L0 of the pilot signal f1 and the crosstalk level is stored in the memory 81.

Subsequently, under the condition that the magnetic head A scans a track T2 at time t2 after the magnetic head B has scanned the track T1 at time t1, a pilot signal of frequency f1 contained in a crosstalk signal from the adjacent track T1 now on the reproduction finished side is extracted. The peak detector 14 detects a crosstalk level L2 of the pilot signal f1. Then, the crosstalk level L0 of the pilot signal f1 at time t0 which is stored in the memory 81 and the crosstalk level L2 of the pilot signal f1 at time t2 are inputted to the differential amplifier (subtracter) 16. The differential amplifier 16 generates a tracking error signal V_{E} in accordance with a level difference between the two inputs. The tracking error signal is fed back to the capstan controller 50 for controlling the speed of the magnetic tape (Fig.4) to perform tracking control of the magnetic head A.

Similarly, a crosstalk level L4 of a pilot signal of frequency f1 contained in a crosstalk signal from an adjacent track T5 on the reproduction unfinished side is stored in the memory at time t4. At time t6, a crosstalk level L6 of a pilot signal of frequency f1 contained in a crosstalk signal from the adjacent track t5 now on the reproduction finished side is detected. By comparing the crosstalk level L4 stored in the memory 81 with the crosstalk level L6 at time t6, a new tracking error signal V_{E} is generated.

In this manner, by storing the crosstalk level of the pilot signal of frequency f1 contained in the crosstalk signal from the adjacent track on the reproduction unfinished side and by comparing the stored crosstalk level with the crosstalk level of the pilot signal of the same frequency f1 contained in the crosstalk signal from the adjacent track now on the reproduction finished side in the subsequent scanning, the tracking error signal V_{E} conforming to the distance and direction of deviation of the center of the main track from the magnetic head A can be generated.

The pilot signals whose crosstalk levels are compared with each other are extracted from crosstalk signals from the adjacent tracks on the reproduction finished side and on the reproduction unfinished side. Since it suffices that the pilot signals to be extracted are of the same frequency, the comparison is not limited to the previously-described comparison, that is, between a pilot signal for track T0 and a pilot signal for track T2 and between a pilot signal for track T4 and a pilot signal for track T6. For example, even when the comparison is carried out between a pilot signal for track T0 and a pilot signal for track T6 or between a pilot signal for track T2 and a pilot signal for track T4, a tracking error signal V_{E} can be generated similarly.

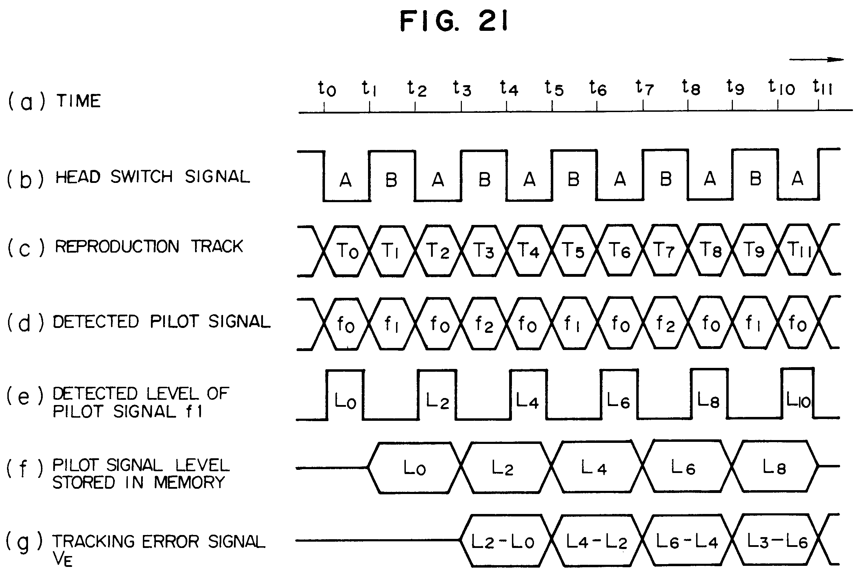

Further, as shown in the waveform diagram of Fig.21, by effecting the comparison of crosstalk levels continuously in overlapping fashion between a pilot signal for track T0 and a pilot signal for track T2, then between a pilot signal for track T2 and a pilot signal for track T4 and subsequently between a pilot signal for track T4 and a pilot signal for track T6, ......, a tracking error signal V_{E} can also be generated each time that the magnetic head A scans a F0 signal recording track.

In the present embodiment, the tracking error signal is generated by using only the pilot signals of frequency f1 but it can also be generated similarly by extracting pilot signals of frequency f2. Further, two systems may be used in combination of which one generates a tracking error signal V_{E} on the basis of pilot signals of frequency f1 and the other generates a tracking error signal on the basis of pilot signals of frequency f2.

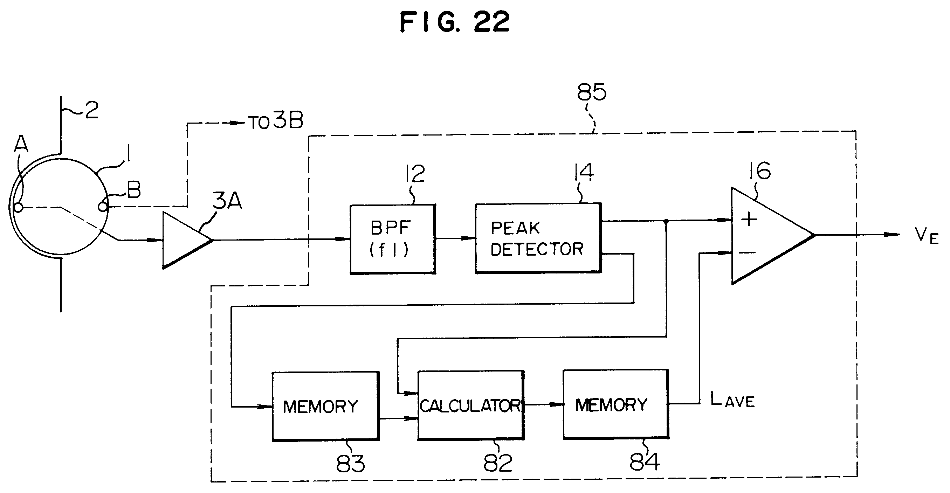

Referring now to Figs.22 and 19, still another embodiment of the invention will be described. Fig.22 is a block diagram showing the construction of still another embodiment of the ATF tracking control system according to the invention utilizing one kind of pilot signals. In Figure 22, components equivalent to those in the Fig.18 embodiment are designated by the same reference numerals.

In Fig.22, a calculator 82 calculates an average value of a crosstalk level of a pilot signal f1 stored in a memory 83 and a crosstalk level delivered out of the peak detector 14. A memory 84 stores the output of the calculator 82 as a reference crosstalk level.

In Fig.22, the capstan controller 50 is not illustrated which responds to the tracking error signal V_{E} to perform feedback control for controlling the speed of the capstan motor 51 such that the V_{E} is rendered to be zero, thereby adjusting the tape travel speed. Also, a block 85 shown by dotted line may be replaced with the tracking error signal detector unit of the embodiments of Figs.4, 7, 10 and 15. However, the control signal Es and the frequency discriminator unit 20 or 39 are unnecessary in the embodiment of Fig.22.

The operation of the present embodiment will be described with reference to Fig.19 showing the relation between the recording track and the magnetic head A. Under the condition that the magnetic head A scans the track T0 at time t0, the band-pass filter 12 having a center frequency of f1 extracts from a signal reproduced by the magnetic head A a pilot signal of frequency f1 contained in a crosstalk signal from the adjacent track T1 on the reproduction unfinished side. The peak detector 14 detects a crosstalk level L0 of the pilot signal f1 and the crosstalk level is stored in the memory 83.

Subsequently, under the condition that the magnetic head A scans the track T2 at time t2 after the magnetic head B has scanned the track T1 at time t1, a pilot signal of frequency f1 contained in a crosstalk signal from the adjacent tack T1 now on the reproduction finished side is extracted. Similarly to the above, a crosstalk level L2 of a pilot signal f1 for track T1 is detected. Concurrently therewith, the calculator 82 calculates an average crosstalk level L_{AVE} of the crosstalk level L0 of pilot signal f1 for track T1 at time t0 which has been stored in the memory 83 and the crosstalk level L2 of the pilot signal f1 for track T1 at time t2. When the magnetic head A travels at a prescribed reproduction speed, the crosstalk level of the pilot signal of frequency f1 contained in the crosstalk signal form the T1 track can be deemed to be the average crosstalk level L_{AVE} and hence it is stored in the memory 84 as a reference crosstalk level. Thereafter, the differential amplifier 16 compares the reference crosstalk level L_{AVE} in the memory 84 with a crosstalk level of a pilot signal of frequency f1 which is contained in a crosstalk signal from the track adjacent to the main track and which is sequentially reproduced by the magnetic head A, thereby generating a tracking error signal V_{E} proportional to a distance D by which the magnetic head A deviates from the center of the track to perform scanning.

In the present embodiment constructed as above, since the crosstalk levels of pilot signals reproduced from the adjacent tracks are sequentially compared with the reference crosstalk level L_{AVE}, this embodiment can also be applied to dynamic tracking in which the head traces by sequentially following a curve of a recording track.

In the Fig.22 embodiment, too, a tracking error signal can be generated by extracting a pilot signal of frequency f2 or by using pilot signals of frequencies of f1 and f2, as in the case of the Fig.18 embodiment. In this case, an additional system identical to the system of Fig.18 or 22 is used in combination and a tracking control signal based on a f1 signal and a tracking control signal based on a f2 signal are alternately switched by a switch unit (not shown) so as to be applied to the capstan controller 50. Efficiently, with the aim of increasing the accuracy of the reference crosstalk level, averaging may be renewed to renew the calculation of reference crosstalk level. Thus, the embodiment can be altered or modified in various ways without changing the gist of the present invention.

As described above, the generation of the tracking error signal according to the present embodiment can be effected using one kind of pilot signals of the same frequency. Accordingly, an accurate tracking error signal free from the generation of any DC offset can be generated without being affected by the frequency characteristics of, for example, the pilot signal detector circuit. In addition, the system of the pilot signal detector circuit can be reduced in number to one to make the whole of the tracking control system inexpensive and compact.

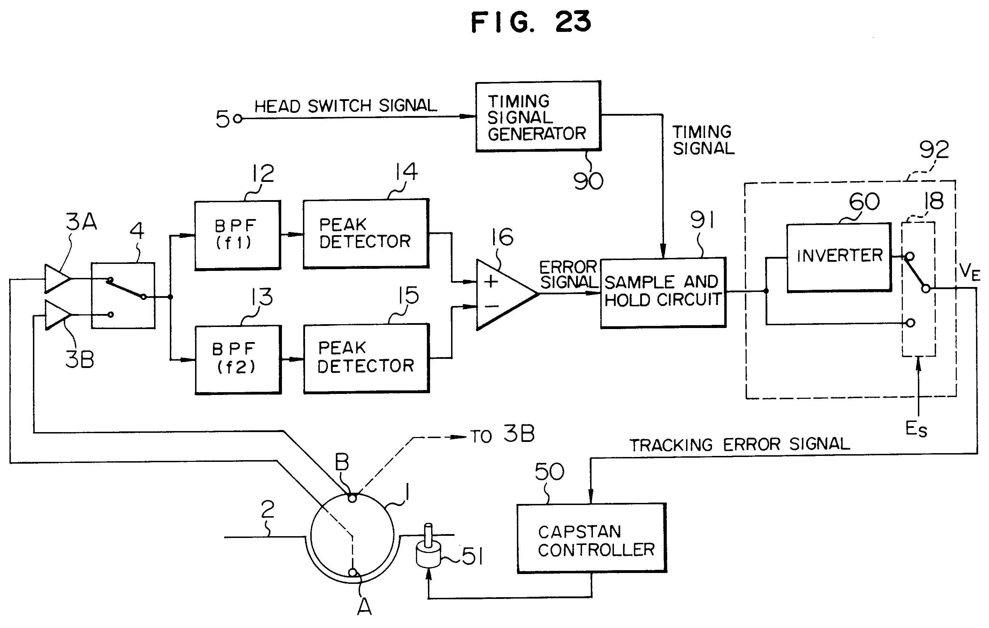

Next, still another embodiment of the ATF tracking control system according to the invention will be described with reference to Figs.23 to 29. This embodiment is directed to an ATF tracking control system in the variable speed reproduction mode. With the present embodiment, like the foregoing embodiments, a tracking error signal V_{E} can also be generated by utilizing pilot signals contained in crosstalk signals.

During variable speed reproduction, a head scans over a plurality of different tracks at each scanning. Accordingly, the position in the longitudinal direction of track at which pilot signals for generation of a tracking control signal V_{E} are fetched must be limited to a specified position. In the present embodiment, the position in the longitudinal direction of the F0 signal recording track for detection of crosstalk signals of pilot signals in accordance with a reproduction speed is preset to the specified position. A sample and hold circuit for sampling and holding the pilot signals in the crosstalk signals is provided and it is controlled in accordance with algorithm set in compliance with the tape speed.

Since the sample and hold circuit detects a crosstalk error signal at a timing for the head to cross the track wherein the F0 signal is recorded, that is, at the specified position in the longitudinal direction of track, stable tracking control can be realized during variable speed reproduction.

An embodiment of the invention directed to this effect will be described with reference to the accompanying drawings.

Fig.23 is a block diagram showing the construction of still another embodiment of the tracking control system which can perform variable speed reproduction. In the Figure, reference numeral 2 designates a magnetic tape serving as a magnetic recording medium, 3A and 3B amplifiers for amplifying reproduction signals from magnetic heads A and B, 12 and 13 band-pass filters (BPF's) having center frequencies at f1 and f2, respectively, and operative to extract pilot signals from an output signal of the amplifier 3A, 14 and 15 peak detectors for detecting crosstalk levels of the pilot signals, 16 a differential amplifier (subtracter) for comparing output levels of the peak detectors 14 and 15, 91 a sample and hold circuit for sampling and holding a crosstalk error signal delivered out of the differential amplifier 16, 90 a timing signal generator circuit for producing a timing signal for control of the sample and hold circuit, 92 a polarity switching unit for selecting the polarity of the crosstalk error signal, and 50 a capstan controller for controlling the tape speed. Components designated by the same reference numerals as those in the other Figures function identically to corresponding components in the other Figures.

The timing signal generator 90 is so constructed as to deliver a timing signal of algorithm preset for each tape speed at a timing synchronous with a head switch signal 5 for switching the magnetic heads A and B. The sample and hold circuit 91 is so controlled as to perform sample operation when the timing signal is high level but hold operation when the timing signal is low level. The polarity switching unit 92 is comprised of an inverter 60 and a switch 18 and operates to make the polarity of an error signal V_{E} in feedback control unidirectional.

The frequency discriminator unit for generation of a control signal Es is not illustrated.

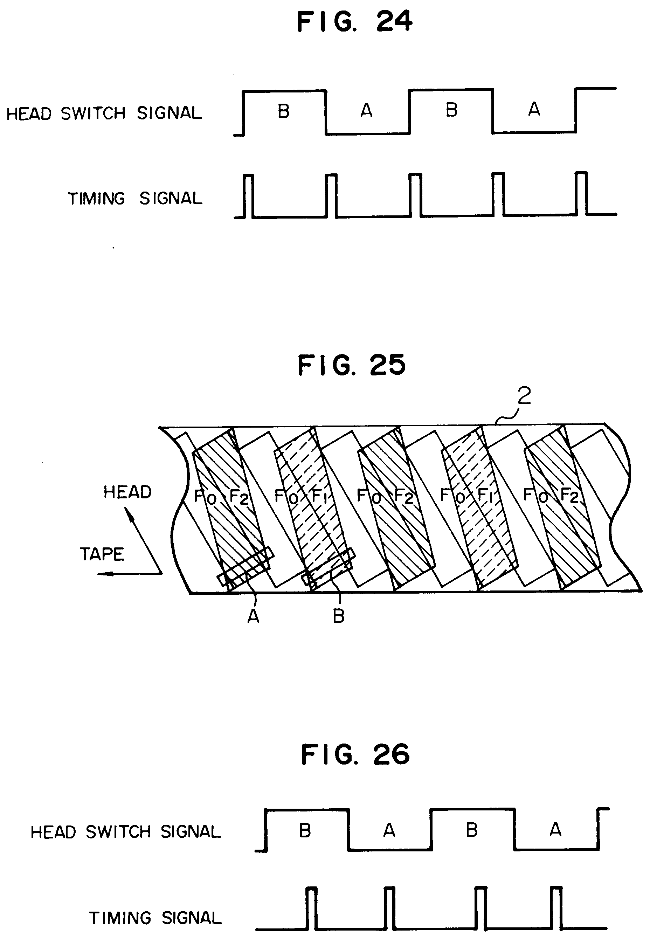

The operation of the system of Fig.23 will be described by referring to an instance where the timing signal delivered out of the timing signal generator circuit 90 is such a signal as set in relation to the head switch signal 5 as shown in Fig.24 during double speed reproduction for performing reproduction at a speed which is twice the normal reproduction speed. In Fig.24, sample operation is set at rise and fall of the head switch signal, that is, at the timing for the magnetic heads A and B to start scanning and hold operation is set at the other timings.

Immediately after the head A has started scanning, that is, when the head A scans a leading portion of a track, the sample and hold circuit 91 samples an output of the differential amplifier 16. The polarity of a crosstalk error signal (f2-f1) delivered out of the differential amplifier 16 is selected by the polarity switch unit 92 and a resulting signal is then fed back to the capstan controller 50 as a signal VE. When the sample and hold circuit 91 performs hold operation, a held signal corresponding to the crosstalk error signal detected at the leading portion of a track is fed back to the capstan controller 50 similarly to the above. Subsequently, immediately after the head B has started scanning, that is, when the head B scans a leading portion of a track, the sample and hold circuit 91 again performs sample operation. The polarity of a crosstalk error signal (f1-f2) delivered out of the differential amplifier 16 is selected by the polarity switch unit 92 and thereafter, a resulting signal is fed back to the capstan controller 50 as a signal V_{E}.

In this manner, by limiting the timing for detection of a crosstalk error signal of pilot signals to the timings for the magnetic heads A and B to scan a leading portion of a track, such control that the head A or B scans the center of the F0 signal recording track at a leading portion thereof is carried out. In other words, the locus of scanning with the head A or B is controlled to a phase as shown in Fig.25. In Fig.25, a hatched portion indicates a locus of the head A and a netted portion indicates a locus of the head B.

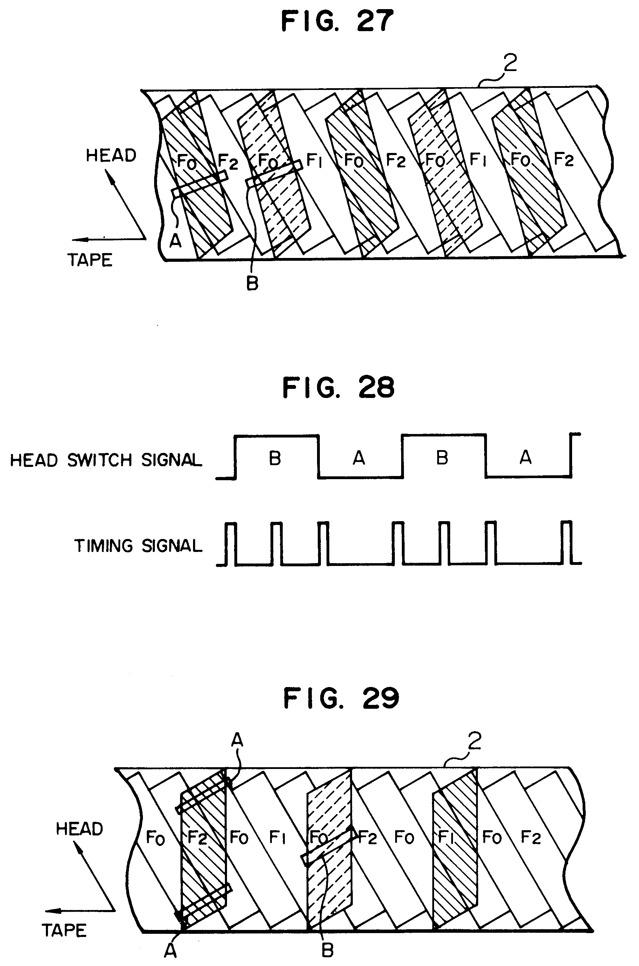

Fig.26 shows another example of a timing signal delivered out of the timing signal generator circuit 90 during double speed reproduction. In Fig.26, the timing signal is so set that a crosstalk error signal is detected when the head A or B scans a longitudinally central portion of a track. In that case, the locus of scanning with the head A or B can be controlled to a phase as shown in Fig.27. In the longitudinally central portion of a track, the tape 2 is less damaged than near the edge of the track and consequently, a stable reproduction signal can be obtained to permit generation of a more accurate tracking control signal, that is, more accurate tracking control.

Fig.28 shows an example of a timing signal delivered out of the timing signal generator circuit 90 during triple speed reproduction. In Fig.28, the timing signal is so set that the head B detects a crosstalk error signal at a longitudinally center portion of a track and the head A detects a crosstalk signal at two sites, i.e., leading portion and tail end portion of a track, with the result that a locus of scanning with the head A or B can be controlled to a phase as shown in Fig.29.

The embodiment of the operation timing of the sample and hold circuit 91 during double speed reproduction has been described with reference to Figs.24 and 25. But the invention is not limited to this particular embodiment. The reproduction tape speed is not limited to values which are twice and triple the normal reproduction speed and obviously, by similarly controlling the sample and hold circuit 91 in accordance with the tape speed during reproduction at a desired speed, suitable tracking control can be effected even at a desired tape speed.

The head construction is of one channel configuration having heads opposing each other at 180° in the present embodiment but this configuration is not limitative. For example, even with two channels each having heads opposing each other at 180°, similar control can be effected. Thus, the head construction can easily be altered or modified in various ways without changing the gist of the present invention.

As described above, according to the present embodiment, a tracking control signal during variable speed reproduction can be detected at a longitudinally specified preset track site where the head engages the F0 signal recording track and as a result, stable tracking can be realized during variable speed reproduction.

## Claims

1. An ATF tracking control system for use in a digital signal magnetic recording/reproducing system having a rotary cylinder (1) and first and second heads (A, B) arranged on said rotary cylinder (1) at positions opposing to each other in respect of a rotary axis of said rotary cylinder and having different azimuth angles, wherein digital information signals are recorded on recording tracks on a magnetic tape (2) wound about said rotary cylinder and said first and second heads scan said recording tracks to read said digital information signals, said ATF tracking control system being adapted to control a travel speed of said magnetic tape such that said heads trace said tracks accurately, wherein a frequency spectrum of a digital information signal (F0) recorded on a first track (T0) has dips at predetermined first and second frequencies (f1, f2), a frequency spectrum of a digital information signal (F1) recorded on a second track (T1) has a peak at said first frequency (f1) and a dip at said second frequency (f2), a frequency spectrum of a digital information signal (F0) recorded on a third track (T2) has dips at said first and second frequencies (f1, f2), a frequency spectrum of a digital information signal (F2) recorded on a fourth track (T3) has a peak at said second frequency (f2) and a dip at said first frequency (f1), and one cycle in which said first to fourth tracks (T0, T1, T2, T3) are alternately sequentially scanned with said first and second heads (A, B) is repeated to read said digital information signals (F0, F1, F2);
said ATF tracking control system being characterized by:
means (12, 13, 14, 15) for detecting levels of components of said first and second frequencies (f1, f2) from a digital information signal read by said first head (A);
tracking error detector means (16, 17) for producing an output signal representing a difference (f1-f2, f2-f1) between levels of said detected components of said first and second frequencies (f1, f2);
polarity selector means (18) for selecting a polarity of the output signal of said tracking error detector means (16, 17) in accordance with a selection signal (Es), and for outputting said output signal as a tracking error signal (V_{E});
frequency discriminator means (20) for detecting the levels of said components of said first and second frequencies (f1, f2) from a digital information signal read by said second head (B), for determining said polarity in accordance with one of said frequency components having a larger detection level than the other level, and for generating said selection signal (Es) corresponding to the polarity; and
means (50) for controlling the travel speed of said magnetic tape in accordance with said tracking error signal (V_{E}) such that the difference between the levels of said components of said first and second frequencies (f1, f2) becomes zero.

2. An ATF tracking control system according to claim 1, wherein said level detector means (12, 13, 14, 15) includes first and second band-pass filter circuits (12, 13) for passing said components of said first and second frequencies (f1, f2) and first and second peak detectors (14, 15) for detecting peak values of outputs of said first and second band-pass filter circuits (12, 13), and said tacking error detector means includes subtracter circuit means (16, 17) for delivering a difference between outputs of said first and second peak detectors (14, 15).

3. An ATF tracking control system according to claim 2, wherein said subtracter circuit means (16, 17) includes a first subtracter circuit (16) for subtracting the output of said second peak detector (15) from the output of said first peak detector (14) and a second subtracter circuit (17) for subtracting the output of said first peak detector (14) from the output of said second peak detector (15), and said polarity selector means (18) delivers any one of the outputs of said first and second subtracter circuits (16, 17) as said tracking error signal (V_{E}) in accordance with said selection signal (Es).

4. An ATF tracking control system according to claim 2, wherein said subtracter circuit means includes a comparator circuit (16) for delivering a difference between the outputs of said first and second peak detectors (14, 15) and an inverter circuit (60) for inverting the polarity of an output of said comparator circuit (16) and delivering a resulting signal, and said polarity selector means (18) delivers any one of the outputs of said comparator circuit (16) and said inverter circuit (60) as said tracking error signal.

5. An ATF tracking control system according to claim 2, wherein said frequency discriminator means (20) includes third and fourth band-pass filter circuits (22, 23) for passing said components of said first and second frequencies (f1, f2), third and fourth peak detectors (24, 25) for detecting peak values of outputs of said third and fourth band-pass filter circuits (22, 23), a comparator circuit (26) for producing a difference between outputs of said third and fourth peak detectors (24, 25), a latch circuit (27) responsive to a timing signal to latch said difference from said comparator circuit (26), and a timing circuit (28) for generating said timing signal on the basis of a signal synchronous with the alternate scanning operations of said first and second heads (A, B).

6. An ATF tracking control system for use in a digital signal magnetic recording/reproducing system having a rotary cylinder (1), first and second heads (A1, A2) arranged on said rotary cylinder at positions opposing to each other in respect of a rotary axis of said rotary cylinder and having the same azimuth angle, a third head (B1) arranged adjacently to said first head (A1) and having an azimuth angle different from that of said first head (A1), and a fourth head (B2) arranged adjacently to said second head (A2) and having an azimuth angle different from that of said second head (A2), wherein digital information signals are recorded on recording tracks on a magnetic tape (2) wound about said rotary cylinder and said first to fourth heads scan said recording tracks to read said digital information signals, said ATF tracking control system being adapted to control a travel speed of said magnetic tape such that said heads trace said tracks accurately, wherein a frequency spectrum of a digital information signal (F0) recorded on a first track (T0) has dips at predetermined first and second frequencies (f1, f2), a frequency spectrum of a digital information signal (F1) recorded on a second track (T1) has a peak at said first frequency (f1) and a dip at said second frequency (f2), a frequency spectrum of a digital information signal (F0) recorded on a third track (T2) has dips at said first and second frequencies (f1, f2), a frequency spectrum of a digital information signal (F2) recorded on a fourth track (T3) has a peak at said second frequency (f2) and a dip at said first frequency (f1), a pair of said first and third heads (A1, B1) scan adjacent two tracks simultaneously, a pair of said second and fourth heads (A2, B2) scan other adjacent two tracks simultaneously, and one cycle in which said paired first and third heads (A1, B1) and said paired second and fourth heads (A2, B2) scan said first to fourth tracks (T0, T1, T2, T3) alternately sequentially is repeated to read said digital information signals,
said ATF tracking control system being characterized by:
first level detector means (12, 13, 14, 15) for detecting levels of components of said first and second frequencies (f1, f2) from a digital information signal read by said first head (A1);
first tracking error detector means (16, 17) for producing an output signal representing a difference (f1-f2, f2-f1) between levels of said detected components of said first and second frequencies (f1, f2);
first polarity selector means (18) for selecting a polarity of the output signal of said first tracking error detector means (16, 17) in accordance with a selection signal (Es), and for outputting said output signal as a first tracking error signal;
first frequency discriminator means (20) for detecting the levels of said components of said first and second frequencies (f1, f2) from a digital information signal read by said fourth head (B2), for determining said polarity in accordance with one of said frequency components having a larger detection level than the other, and for generating said selection signal (Es) corresponding to said polarity;
second level detector means (38) for detecting levels of components of said first and second frequencies (f1, f2) from a digital information signal read by said second head (A2);
second tracking error detector means (38) for producing an output signal representing a difference (f1-f2, f2-f1) between levels of said detected components of said first and second frequencies (f1, f2);
second polarity selector means (38) for selecting the polarity of the output signal of said tracking error detector means (16, 17) in accordance with a selection signal (Es), and for outputting said output signal as a second tracking error signal;
second frequency discriminator means (39) for detecting the levels of said components of said first and second frequencies (f1, f2) from a digital information signal read by said third head (B1), for determining said polarity in accordance with one of said frequency components having a larger detection level than the other, and for generating said selection signal (Es') corresponding to said polarity;
switching means (40) for delivering any one of said first and second tracking error signals on the basis of a signal (5) synchronous with the alternate scan operations by said paired first and third heads (A1, B1) and said paired second and fourth heads (A2, B2); and
means (50) for controlling the travel speed of said magnetic tape in accordance with said tracking error signal from said switching means (40) such that the difference between the levels of said components of said first and second frequencies (f1, f2,) becomes zero.

7. An ATF tracking control system for use in a digital signal magnetic recording/reproducing system having a rotary cylinder (1), first and second heads (A1, A2) arranged on said rotary cylinder at positions opposing to each other in respect of a rotary axis of said rotary cylinder and having the same azimuth angle, a third head (B1) arranged adjacently to said first head (A1) and having an azimuth angle different from that of said first head (A1), and a fourth head (B2) arranged adjacently to said second head (A2) and having an azimuth angle different from that of said second head (A2), wherein digital information signals are recorded on recording tracks on a magnetic tape (2) wound about said rotary cylinder and said first to fourth heads scan said recording tracks to read said digital information signals, said ATF tracking control system being adapted to control a travel speed of said magnetic tape such that said heads trace said tracks accurately, wherein a frequency spectrum of a digital information signal (F0) recorded on a first track (T0) has dips at predetermined first and second frequencies (f1, f2), a frequency spectrum of a digital information signal (F1) recorded on a second track (T1) has a peak at said first frequency (f1) and a dip at said second frequency (f2), a frequency spectrum of a digital information signal (F0) recorded on a third track (T2) has dips at said first and second frequencies (f1, f2), a frequency spectrum of a digital information signal (F2) recorded on a fourth track (T3) has a peak at said second frequency (f2) and a dip at said first frequency (f1), a pair of said first and third heads (A1, B1) scan adjacent two tracks simultaneously, a pair of said second and fourth heads (A2, B2) scan other adjacent two tracks simultaneously, and one cycle in which said paired first and third heads (A1, B1) and said paired second and fourth heads (A2, B2) scan said first to fourth tracks (T0, T1, T2, T3) alternately sequentially is repeated to read said digital information signals,
said ATF tracking control system being characterized by:
switching means (4, 33) for alternately delivering either a pair of digital information signals read by said first and third heads (A1, B1) or a pair of digital information signals read by said second and fourth heads (A2, B2);
level detector means (12, 13, 14, 15) for detecting levels of components of said first and second frequencies (f1, f2) from one (A1 or A2) of said paired digital information signals delivered out of said switching means (4, 33);
tracking error detector means (16, 17) for producing an output signal representing a difference (f1-f2, f2-f1) between levels of said detected components of said first and second frequencies (f1, f2);
polarity selector means (18) for selecting a polarity of the output signal from said tracking error detector means (16, 17) in accordance with a selection signal (Es), and for outputting said output signal as a tracking error signal (V_{E});
frequency discriminator means (42) for detecting the levels of said components of said first and second frequencies (f1, f2) from one of said paired digital information signals (B1 or B2) delivered out of said switching means (4, 33), for determining said polarity in accordance with one of said frequency components having a larger detection level than the other level, and for generating said selection signal (Es) corresponding to said polarity; and
means (50) for controlling the travel speed of said magnetic tape in accordance with said tracking error signal such that the difference between the levels of said components of said first and second frequencies (f1, f2) becomes zero.

8. An ATF tracking control system according to claim 7, wherein said frequency discriminator means (42) includes third and fourth band-pass filter circuits (22, 23) for passing said components of said first and second frequencies (f1, f2) read by said third and fourth heads (B1, B2), third and fourth peak detectors (24, 25) for detecting peak values of outputs of said third and fourth band-pass filter circuits (22, 23), and a comparator circuit (26) for delivering a difference between outputs of said third and fourth peak detectors (24, 25).

9. An ATF tracking control system according to claim 1 further comprising:
a variable gain amplifier (70) for amplifying any one of said components of said first and second frequencies (f1, f2) detected when said second head (B) scans said second and fourth tracks (T1, T3); and
a signal level comparator (71) for generating, on the basis of a difference between an output of said variable gain amplifier (70) and the other of said components of said first and second frequencies (f1, f2) detected when said second head (B) scans said second and fourth tracks (T1, T3), a signal (Vc) for controlling the gain of said variable gain amplifier (70) such that said output difference becomes zero.

10. An ATF tracking control system according to claim 2 further comprising:
a variable gain amplifier (70) for amplifying any one of said components of said first and second frequencies (f1, f2) detected when said second head (B) scans said second and fourth tracks (T1, T3);
a signal level comparator (71) for generating, on the basis of a difference between an output of said variable gain amplifier (70) and the other of said components of said first and second frequencies (f1, f2) detected when said second head (B) scans said second and fourth tracks (T1, T3), a signal (Vc) for controlling the gain of said variable gain amplifier (70) such that said output difference approaches zero; and
said variable gain amplifier (70) being connected to amplify any one of the outputs of said first and second band-pass filter circuits (12, 13) for passing said components of said first and second frequencies (f1, f2) or any one of the outputs of said first and second peak detectors (14, 15) for detecting peak values of said first and second band-pass filter circuits (12, 13).

11. An ATF tracking control system according to claim 6 further comprising:
a variable gain amplifier (70) for amplifying any one of said components of said first and second frequencies (f1, f2) detected when said third and fourth heads (B1, B2) scan said second and fourth tracks (T1, T3); and
a signal comparator (71) for generating, on the basis of a difference between an output of said variable gain amplifier (70) and the other of said components of said first and second frequencies (f1, f2) detected when said third and fourth heads (B1, B2) scan said second and fourth tracks (T1, T3), a signal (Vc) for controlling the gain of said variable gain amplifier (70) such that said output difference becomes zero.

12. An ATF tracking control system according to claim 7 further comprising:
a variable gain amplifier (70) for amplifying any one of said components of said first and second frequencies (f1, f2) detected when said second head (B) scans said second and fourth tracks (T1, T2);
a signal level comparator (71) for generating, on the basis of a difference between an output of said variable gain amplifier (70) and the other of said components of said first and second frequencies (f1, f2) detected when said second head (B) scans said second and fourth tracks (T1, T3), a signal (Vc) for controlling the gain of said variable gain amplifier (70) such that said output difference becomes zero,
said variable gain amplifier (70) being connected to amplify any one of the outputs of said first and second band-pass filter circuits (12, 13) for passing said components of said first and second frequencies (f1, f2) or any one of the outputs of said first and second peak detectors (14, 15) for detecting peak values of said first and second band-pass filter circuits (12, 13).

13. An ATF tracking control system for use in a digital signal magnetic recording/reproducing system having a rotary cylinder (1) and first and second heads (A, B) arranged on said rotary cylinder (1) at positions opposing to each other in respect of a rotary axis of said rotary cylinder and having different azimuth angles, wherein digital information signals are recorded on recording tracks on a magnetic tape (2) wound about said rotary cylinder and said first and second heads scan said recording tracks to read said digital information signals, said ATF tracking control system being adapted to control a travel speed of said magnetic tape such that said heads trace said tracks accurately, wherein a frequency spectrum of a digital information signal (F0) recorded on a first track (T0) has dips at predetermined first and second frequencies (f1, f2), a frequency spectrum of a digital information signal (F1) recorded on a second track (T1) has a peak at said first frequency (f1) and a dip at said second frequency (f2), a frequency spectrum of a digital information signal (F0) recorded on a third track (T2) has dips at said first and second frequencies (f1, f2), a frequency spectrum of a digital information signal (F2) recorded on a fourth track (T3) has a peak at said second frequency (f2) and a dip at said first frequency (f1), and one cycle in which said first and second heads scan said first to fourth tracks (T0, T1, T2, T3) alternately sequentially is repeated to read said digital information signals,
said ATF tracking control system being characterized by:
means (12, 14) for detecting any one of levels of said components of said first and second frequencies (f1, f2) from a digital information signal read by said first head (A);
memory means (81) for storing the detected level of said component of said first frequency (f1) or said component of said second frequency (f2) as a reference value;
tracking error detector means (16) for producing a tracking error signal (VE) which represents a difference (f1-f1, f2-f2) between the presently detected level of any one of said components of said first and second frequencies (f1, f2) and said reference value stored in said memory means (81); and
means (50) for controlling the travel speed of said magnetic tape in accordance with said tracking error signal (VE) such that the difference between said presently detected level and said reference value becomes zero.

14. An ATF tracking control system according to claim 13, wherein said memory means includes means (82) for calculating an average value (L_{AVE}) of levels of past detected components of said first frequency (f1) or of previously detected components of said second frequency (f2), and a memory unit (84) for storing said average value (L_{AVE}) as said reference value, and said tracking error detector means (16) delivers a difference between said reference value (L_{AVE}) stored in said memory unit (84) and said presently detected level.

15. A ATF tracking control system according to claim 13 further comprising:
first level detector means (12) detecting said component of said first frequency (f1) from a digital information signal read by said first head (A);
second level detector means (12) detecting said component of said second frequency (f2) from a digital information signal read by said first head (A);
first memory means (81) storing a level of said detected component of said first frequency (f1) as a first reference value;
second memory means (81) storing a level of said detected component of said second frequency (f2) as a second reference value;
first tracking error detector means (16) producing a first tracking error signal which represents a difference (f1-f1) between a detected component of said first frequency (f1) and said first reference value stored in said first memory means (81);
second tracking error detector means (16) producing a second tracking error signal which represents a difference (f2-f2) between a detected component of said second frequency (f2) and said second reference value stored in said second memory means (81);
switching means for alternately selecting and outputting outputs of said first and second tracking error detector means (16); and
means (50) for controlling the travel speed of said magnetic tape in accordance with said tracking error signal from said switching means such that the difference between said presently detected level and said reference value becomes zero.

16. An ATF tracking control system according to claim 1, wherein said digital signal magnetic recording/reproducing system uses the reproduction tape speed which is variable and said ATF tracking control system further comprises:
a signal generator circuit (90) for generating a timing signal when said first head (A) comes above a predetermined track site during scanning of said track with said first head (A), said predetermined track site being preset in accordance with said reproduction tape speed; and
a sample and hold circuit (91) responsive to said timing signal for holding an output of said tracking error detector means (16) until the next timing signal is applied and supplying said held value to said polarity selector means (18).

17. An ATF tracking control system according to claim 4, wherein the reproduction tape speed is variable and said ATF tracking control system further comprises:
a signal generator circuit (90) for generating a timing signal when said first head (A) comes above a predetermined track site during scanning of said track with said first head (A), said predetermined track site being preset in accordance with said reproduction tape speed; and
a sample and hold circuit (91) responsive to said timing signal to hold an output of said comparator circuit (16) until the next timing signal is applied and supplying said held value to said inverter circuit (60),
said polarity selector means (18) delivering, as said tracking error signal (VE), any one of the value held by said sample and hold circuit (91) and the output of said inverter circuit (60).

18. An ATF tracking control system according to claim 16, wherein said signal generator circuit (90) generates said timing signal at least once during one scanning operation by said first head (A).

19. An ATF tracking control system according to claim 17, wherein said signal generator circuit (90) generates said timing signal at least once during one scanning operation by said first head (A).

20. An ATF tracking control system according to claim 6, wherein said digital signal recording/reproducing system uses the reproduction tape speed which is variable and said ATF tracking control system further comprises:
a signal generator circuit (90) for generating a timing signal when said first and second heads (A1, A2) come above predetermined track sites during scanning of said tracks with said first and second heads, said predetermined track sites being preset in accordance with said reproduction tape speed; and
a sample and hold circuit (91) responsive to said timing signal to hold outputs of said first and second tracking error detector means (16, 17) until the next timing signal is applied and supplying said held value to said first and second polarity selector means (18).

21. An ATF tracking control system according to claim 7, wherein said digital signal recording/reproducing system uses the reproduction tape speed which is variable and said ATF tracking control system further comprises:
a signal generator circuit (90) for generating a timing signal when said first and second heads (A1, A2) come above predetermined track sites during scanning of said tracks with said first and second heads (A1, A2), said predetermined track sites being preset in accordance with said reproduction tape speed; and
a sample and hold circuit (91) responsive to said timing signal to hold outputs of said tracking error detector means (16, 17) until the next timing signal is applied and supplying said held values to said polarity selector means (18).
